# EUROPEAN PATENT SPECIFICATION

(11) **EP 1 631 758 B1**
(45) Date of publication and mention of the grant of the patent: **14.05.2008**
(21) Application number: 04736416.1
(22) Date of filing: 09.06.2004
(51) Int. Cl.: F16H 47/04, F03D 11/02

(54) **VARIABLE RATIO GEAR**
GETRIEBE MIT VERÄNDERLICHER ÜBERSETZUNG
TRANSMISSION RAPPORT VARIABLE

(30) Priority: 10.06.2003 GB 0313345
(43) Date of publication of application: 08.03.2006
(73) Proprietor: Orbital2 Limited, Morva Griggs Close Chipping Campden, Gloucestershire GL55 6BJ (GB)
(72) Inventor: Hicks, Raymond J., Llangammarch Wells, Powys LD4 4BS (GB)
(74) Representative: Dunlop, Brian Kenneth Charles
(86) International application number: PCT/GB2004/002435
(87) International publication number: WO 2004/109157

(56) References cited:
- EP-A- 1 055 844
- FR-A- 2 237 446
- FR-A- 2 463 335
- US-A- 5 584 772

## Description

The present invention relates to a hybrid differential epicyclic gearbox having an infinitely variable ratio e.g. it enables a prime mover, such as a wind turbine running at relatively low continuously varying speeds to drive smoothly a constant speed machine, such as a synchronous generator, without any transient torques in excess of a chosen maximum. Alternatively, it may be generally used in applications in which either or both driving and driven machines may be required to arbitrarily vary their respective speeds and therefore, their instantaneous ratio with respect to one another viz automotive, off highway, marine, aerospace, process machinery, pumps, compressors, wave or tidal power etc.

In particular, the requirement for speed increasing transmissions for wind turbines stems from their low rotational speed compared with the preferred generator speed, typically 1500 rpm. The low turbine speed is dictated by the fact that wind energy generation is a function of the turbine-swept area and the blade tip speed limits. Thus, the higher the power, the lower the rotor speed. In effect, power is directly proportional to the rotor diameter squared, while rotor speed is inversely proportional to tip diameter and/or the square root of rotor power; e.g. a 3000 kW turbine would run at 16 rpm compared with 44 rpm for a 400kW machine with the same tip speed. Since rotor weight and torque are directly proportional to the rotor diameter cubed, bigger turbines not only have bigger transmission step up ratios but even bigger input torques and therefore lower power to weight ratio e.g. whereas a 3000 kW turbine generates 7.5 times the power of a 400kw machine its torque and weight are increased by a factor of 20.54 (i.e. 7.5 raised to the power of 1.5) while its ratio is increased by a factor of 2.74 because its speed is reduced by the square root of 7.5.

Since the volume, weight and price of a gearbox is governed by its torque and overall ratio, there is an incentive to reduce weight by reducing the parasitic transient overload torques which typically occur (and for which provision is made) in all fixed ratio wind turbine transmissions. These are created by the stochastic variations in wind speed, air density and unit aerodynamic energy over the large swept area of the turbine. Such variations lead to speed flucuations of the turbine rotor hub at its input to the gearbox, which may occur many times per revolution. This is further complicated, firstly be steady changes in wind speed and secondly by the sudden changes which occur during gusts. Since wind energy is directly related to air velocity cubed, a 50% transient speed increase will increase aerodynamic power by a factor of 3. While some of this power will be dissipated by lower efficiency and some by the increased speed and kinetic energy in the turbine, it follows that with a fixed ratio transmission additional torques will be generated in trying to accelerate the generator. This stems from the fact that the polar moment of inertia of a generator about its own axis when referred to the axis of the turbine rotor is multiplied by the square of the step up ratio. Thus a generator requiring a step up ration of 80%/1 would have a referred inertia 6400 times that about its own axis. A 1 degree angular deviation of the turbine rotor hub from its mean speed of rotation would therefore suggest an 80 degree fluctuation of the generator over the same time scale.

An asynchronous generator can employ power conditioning to produce a smooth electrical output, but this masks the problem because mechanical acceleration torques are still required to change its speed. Such transient acceleration torques can only be mitigated by strain energy in the mechanical transmission path and so more rigid transmissions will have higher torques.

The variable ratio transmission obviates this problem by changing its ratio in a complimentary way, at the same rate as the transient change in the turbine speed. By so doing, generator toque, speed and phase angle and kept constant By allowing the turbine to accelerate and absorb the transient excess of power in the form of kinetic energy.

FR2463335 discloses the features of the preamble of claim 1 or 12, and shows a variable ratio vehicle gear box which employs two epicyclic trains to provide a variable output speed. FR2237446 and EP1055844 show gear boxes similar to the gear box described in FR 2463335.

According to one aspect of the present invention consists in a variable ratio gear box including two or more differential epicyclic trains (X,Y) coupled together to provide three or more mechanical paths for transmitting power and torque to an output shaft (16), a hydraulic bypass unit (18,25) for steplessly variably adjusting the power and torque transmitted through the mechanical paths and a system of clutches (A,B,C) for determining which paths are utilised and the sense in which they, and hence the bypass unit, are driven, the gear box being characterised in that the mechanical paths utilised are determined by which of predetermined speed ranges the input speed falls. A lower speed range may utilise three or more mechanical paths and a higher speed range may utilise fewer mechanical paths. A first mechanical path may include the sunwheel on the second differential train mounted on the output shaft. The second mechanical path may include a pinion driven by the hydraulic bypass unit and drivingly connected via the annulus of the second differential train mounted to the second differential sunwheel on the output shaft. The third mechanical path may include the sunwheel of one differential train, its annulus, the annulus of the second differential train and the sunwheel of the second differential train mounted on the output shaft.

The hydraulic bypass unit may include a closed hydraulic loop incorporating a variable stroke positive displacement hydraulic swash plate unit and a variable stroke positive displacement bent axis unit, the two units being operable respectively as a motor and a pump or as a pump and a motor.

The swash plate unit may drive or be driven by the first differential train, whilst the bent axis unit may drive or be driven by the second differential train. The closed hydraulic loop includes high and low pressure lines interconnecting the swash plate and bent axis and wherein high and low pressure lines are interconnected by a cross line relief valve.

According to another aspect the invention consists in a transmission system including :
(a) a low speed high torque fixed ratio step up stage; and
(b) a low torque high speed variable ratio stage, having an output shaft, for receiving a steplessly variable input speed from the fixed ratio stage and providing a constant output speed on its output shaft wherein the variable ratio stage includes or comprises a gearbox as defined above.

The fixed ratio stage includes two epicyclic stages wherein the epicyclic gears are arranged such that the planet carrier of the second stage acts in parallel to the first stage annuly and transmits part of the input power.

According to a yet further aspect, the invention consists in a transmission system as claimed in claim 12 wherein in the second regime the power is absorbed by a prime mover (41) connected to the system to maintain the output power at the output shaft substantially constant.

In the second regime the power may be absorbed by a prime mover connected to the system to maintain the output power at the output shaft substantially constant.

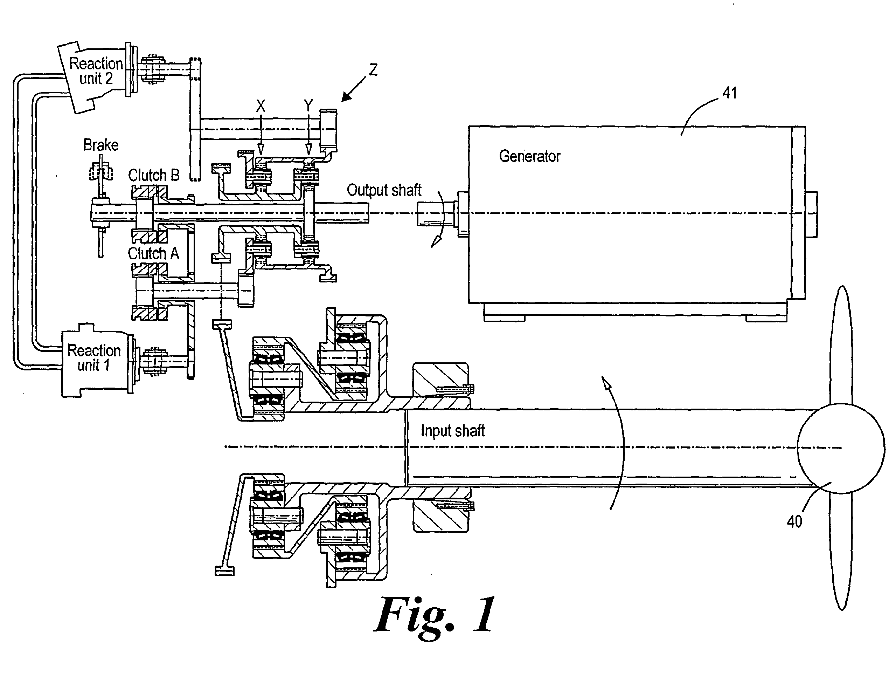

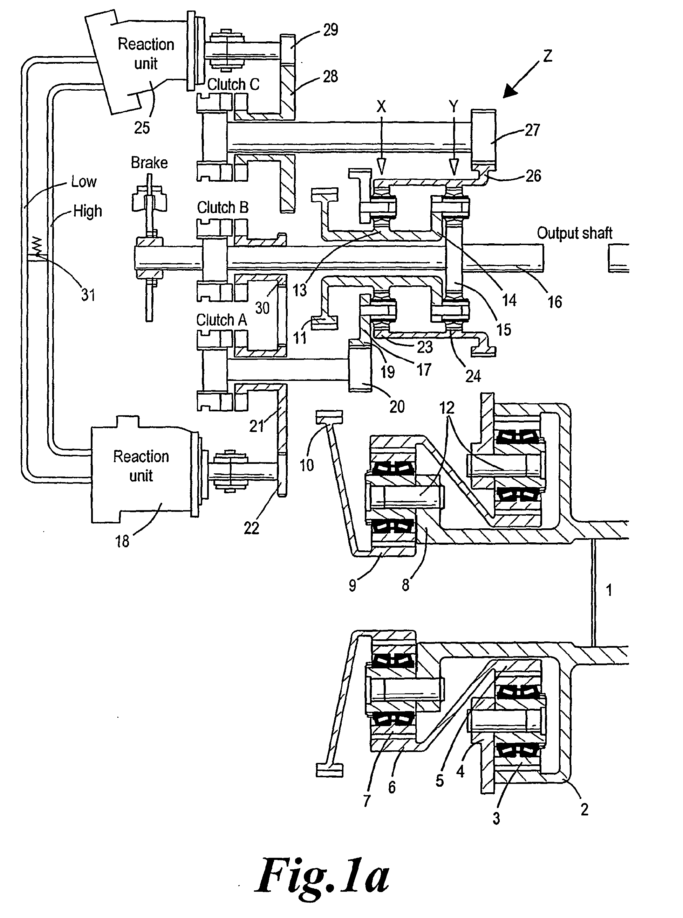

Embodiments of the invention provide a transmission system comprising a compact high torque low speed primary fixed ratio epicyclic step up stage and a low torque high speed secondary variable ratio stage whose output speed may be kept absolutely constant while its input speed varies steplessly (typically from 70% to 100%). By way of example, Figure 1 shows the combined arrangement of the primary fixed and secondary variable ratio trains for a 3.4 MW transmission whose turbine design speed is 16 rpm but is required to vary infinitely from 14 to 20 rpm while its output to a synchronous generator runs at a constant speed of 1500 rpm. In view of the volumetric influence of torque, the main function of the primary gear is to provide the most compact means of increasing the input speed and reducing its torque to a level where the secondary gear is more compact and can more easily effect its variable ratio function.

The invention may be performed in various ways and specific embodiments will now be described with reference to the accompanying drawings in which:
Figure 1 is a part cross sectional schematic view of an assembly of a turbine, gear box and generator;
Figure 1 a is an enlarged view of the gear box of Figure 1 with an additional clutch;
Figure 2 is a graph of both output and bypass power against turbine speed;
Figure 3 is Figure 1 with the gear box operation in low speed regime indicated;
Figure 4 corresponds to Figure 3 but with the high speed regime connections indicated;
Figure 5 is a graph plotting power against turbine speed for different components of the gear box;
Figure 6 is a graph indicting the relationship between the speed of the respective reaction units of the gearbox and turbine speed;
Figure 7 is a plot of swash stroke% against turbine speed for the two reaction units; and
Figure 8 plots torque for the respective reaction units against turbine speed.

Referring to Figure 1, and in particular to Figure 1a, the primary gear comprises two epicyclic stages and a parallel shaft transfer gear having an overall step up ratio of 27.5. The epicyclic stages are arranged such that 60% of the power entering the input shaft 1 flows through the annulus 2 of a star train via eight planets 3 on a fixed planet carrier 4 to a sunwheel 5 driving the annulus 6 of a differential train having five planets 7. The remaining 40% power then flows directly through the planet carrier 8 of the differential train whose two inputs combine to drive a single sunwheel 9 which transmits the total power to a parallel shaft wheel 10 driving a pinion 11 at an overall speed 27.5 times that of the input. It is incidental to the primary gear that the first stage planet carrier 4 is the only reaction member and unlike conventional fixed ratio epicyclic planetary gears, there is no direct connection between al live gear element and the gear case. Furthermore, this planet carrier actually serves as the reaction for the complete transmission and is much more compliant than conventional planetary systems. The reason for this is that when using so many planets it is necessary to mount them on flexible spindles 12 for load sharing purposes. Fixed ratio transmissions with differentially split power paths such as this can be arranged in many other ways dependent on the rotational, coupling and mounting requirements of a particular installation.

The secondary variable ratio stage or gear box, generally indicated at 2, X,Y, couples two differential epicyclic trains together to provide four elements through which torque and power can be transmitted; an input comprising a sunwheel 13 of the first train and a planet carrier 14 of the second, driven at varying speed by the primary train output pinion 11, a sunwheel 15 of the second train mounted on the output shaft 16 driving a constant speed generator 41 at 1500 rpm. The planet carrier 17 of the first train serves as a first reaction member geared to drive a variable stroke positive displacement hydraulic swash plate unit 18 via wheel 19 to pinion 20 through clutch 1 then wheel 21 to pinion 22. The respective annuli 23 and 24 of the first and second trains are coupled together to serve as a second reaction member geared either to drive or be driven by a variable stroke positive displacement bent axis unit 25 via wheel 26 to pinion 27 through clutch C then wheel 28 to pinion 29. The two hydraulic units have the same maximum displacement and are connected to form a closed hydrostatic transmission wherein one is always a pump and the other a motor and vice versa. Unit 18 may either be driven via clutch 1 by the first reaction member 17 or may drive output shaft 16 via wheel 21 pinion 30 and clutch B. This enables the overall transmission ratio of input to output to be infinitely varied in two modes.

The first mode is for low to medium input speed operation centred on the turbine rated design where the turbine spends most of its life in terms of energy capture. In this mode, power is transmitted in parallel via two major mechanical and one minor hydraulic path (from zero to 6% of total) with the first reaction member 17 driving unit 18 as a pump whose output drives unit 25 as a motor driving the second reaction member i.e. annuli 23 and 24.

The second mode is for high input speed where the turbine spends a minor proportion of its life operating relatively inefficiently at higher wind speeds using blade pitch control to limit power at a constant level. In this mode, power is transmitted in parallel via a major mechanical and a minor hydraulic path (from zero to 15% of total) in which unit 18 becomes a motor driving the output shaft 16 and unit 25 a pump driven by annulus-24.

The transition from first to second modes may be effected synchronously with zero hydraulic power and no interruption of total transmitted power flow. In both modes the transmission of power from input to output always flows in the same sense via the various parallel paths without any re-circulation of power.

While for this application, only a limited speed range is required, it is also quite feasible to extend the range downwards to even lower input speeds and/or reduce the hydraulic bypass power by embodying a third two path mode in which unit 18 acts as a motor driving carrier 17 while unit 25 acts as a pump driven by the input. This would require an additional set of gears and another clutch to facilitate connection to pinion 11 and enable the transition between this low speed mode and the first mode as described above to be effected synchronously with zero hydraulic power and no interruption of the total throughput power. It is therefore feasible to increase the number of two and/or three path modes and the extent of their respective ranges to match a particular transmission torque/speed characteristic as appropriate for other applications and optimise overall efficiency.

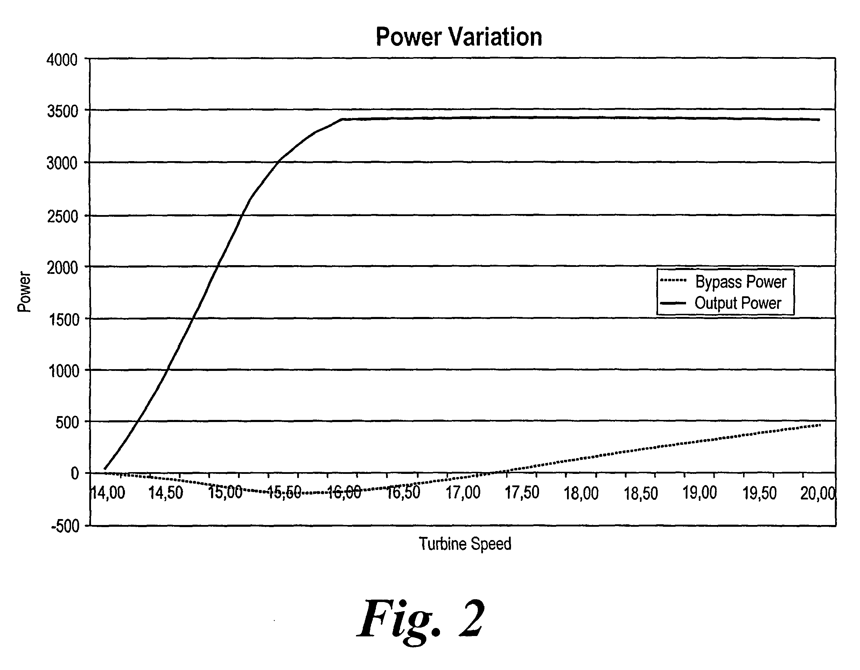

For a better understanding of this particular application the following sequence occurs when the speed of turbine 40 is increased from 14 to 20 rpm in accordance with the designed power/speed characteristic as shown in Figure 2.

At 14 rpm the first reaction 17 is running at +30.4 rpm and the second reaction, annuli 23 and 24 at -134.9 rpm. After due allowance for the respective step up gears, unit 18 rotates at +360.7 rpm and unit 25 -2650 rpm. Thus, if unit 18 is pumping at full stroke then unit 25 (subject to leakage losses) will be motoring at 0.136 stroke.

Since there is little or no power being taken from the turbine at this point then the hydraulic pressure will be virtually zero.

If the stroke of unit 25 is increased while that of unit 18 is kept constant, then a number of effects take place:
1. Unit 18 speed increases because it is allowed to pump at an increased rate and extract more power.
2. Unit 25 speed reduces because of the linear differential relationship of the gearing i.e. as one speed increases linearly the other reduces linearly.
3. Unit 25 torque and power increase with its greater stroke and the increased flow from unit 18.
4. The turbine speed will increase compatible with a reduction of the step up ratio and a constant output/generator speed of 1500 rpm.

Further progressive increase of unit 25 stroke will further allow unit 18 speed to increase, unit 25 speed to reduce and the overall ratio to reduce, until both strokes are equal. At this point, subject to leakage and pressure losses, the torque and speeds of the two units will be numerically equal but with a difference in sense allowing for their respective pumping and motoring functions. This occurs at a turbine speed of 15.87 rpm i.e. at 64.8% of the swash unit maximum speed of 1800 rpm and at 44% of the bent axis maximum speed of 2650 rpm.

To further reduce the overall step up ratio it now becomes necessary to reduce the stroke of unit 18. This allows it to rotate faster as its displacement reduces, but since unit 25 rotates more slowly because of the linear speed relationship, the flow is also reduced by a commensurate amount.

When unit 18 stroke is at zero, its speed will become a maximum while that of unit 25 will be zero. The turbine speed at that point will have increased to 17.35 rpm.

Throughout this first range from 14 to 17.35 rpm the hydraulic power flowing from the first reaction equals the power flowing into the second reaction. (Similarly, in the second range from 17.35 to 20 rpm all the power flows from the second to the first) It follows that when either reaction is stationary with a finite stroke the power flow is zero and the other reaction is idling at a maximum speed with zero stroke and torque. At all points over this range the combined reaction torque i.e. the difference between overall input and output torques, is shared between the two reaction members.
The net effect is that the product of reaction torques and speeds leads to a peak bypass hydraulic power of some 206 kW at a turbine speed of 15.7 rpm. However, the respective peak torques of 2022 and 2363 Nm of units 18 and 25 actually occur at turbine speeds of 15.4 and 17.35 rpm while their respective peak speeds of 1800 and 2650 occur at 17.35 rpm and 14 rpm.

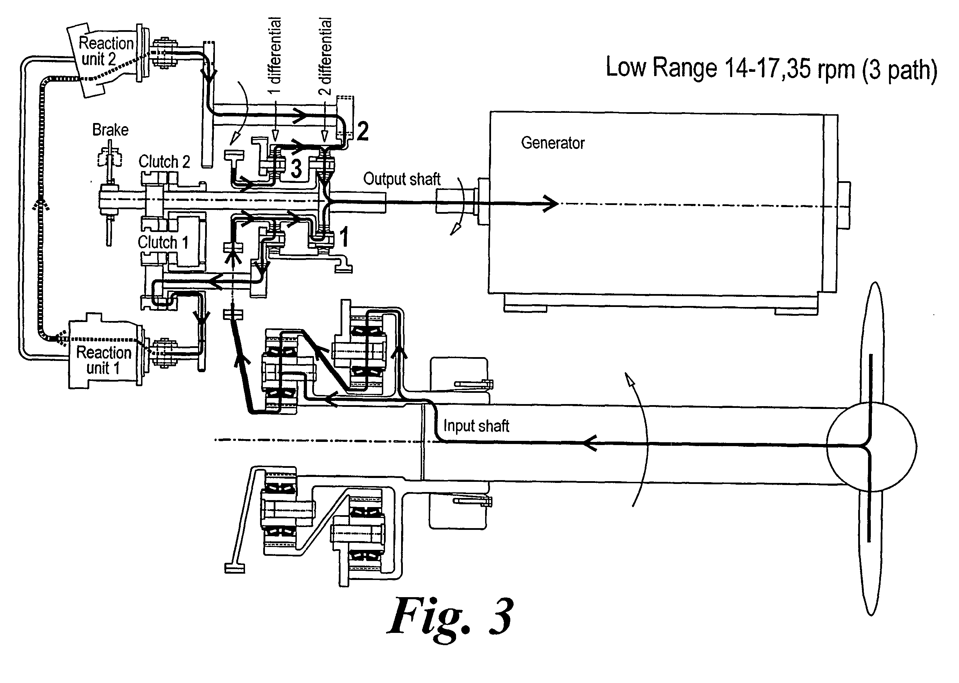

Figure 3 shows the power flow paths in the range from 14 to 17.35 rpm. Firstly the input power is divided between the first sunwheel 13 and the second carrier 14. In the first train this further divides between power flowing from the carrier 17 to unit 18 and from annulus 23 to annulus 24. In the second train, power flows differentially from the carrier 15 and annulus 24 to the output sunwheel 15. In addition power flows from carrier 17 and is transmitted hydraulically to annulus 24 via units 18 and 25 so that it adds to the power transmitted to sunwheel 15. Thus power flows in the same sense from the input to the output along 3 parallel paths, two mechanical and one hydrostatic. This ensures that, in this range where the major part of turbine life occurs, hydraulic losses are minimised. The reason for choosing a lower datum speed at 13.16 rpm, at which carrier 17 would be stationary, is to ensure that at the bottom operating speed of 14 rpm, where it may spend some appreciable time, unit 18 always has a finite speed at its maximum stroke and unit 25 has a finite stroke at its maximum speed, to ensure that there is an adequate hydraulic flow to prevent overheating, albeit no power is generated by the turbine at this point.

In the second range from 17.35 to 20 rpm the first train becomes redundant with all the power flowing exclusively through carrier 14. At a turbine speed of 17.35 rpm pinion 30 synchronises with shaft 16 so that clutch B can be engaged at zero torque while clutch A is still engaged. At this point with both clutches engaged, the secondary gear effectively becomes a fixed ratio gear locked mechanically at a step up ratio of 3.145. When this occurs, there is still a static torque in unit 25 which transiently serves as a stationary motor with no flow or power and it follows that unit 18 while running at its maximum/synchronising speed of 1800 rpm will have a small finite stroke and torque as a pump making up leakage loss.

Clutch A may now be disengaged so that the drive to unit 18 transfers mechanically from carrier 17 to output shaft 16. Further algebraic reduction of unit 18 stroke through zero into reverse allows unit 25 to start rotating in the direction imposed by the torque reaction in annulus 24 so that it changes from motoring to pumping. (The torque in annulus 23 is now virtually zero). The hydraulic output from unit 25 then drives unit 18 as a constant speed variable stroke motor directly coupled to the output shaft 16. Further increase of unit 18 stroke in the reverse sense will allow unit 25 to increase speed and thereby allow the turbine speed to increase and the overall step up ratio to decrease in a complementary way.

At a turbine speed of 20 rpm the speed of unit 25 will be 2102 rpm while unit 18 remains at a constant speed of 1800 rpm. Based on 3400 kW output, unit 25 torque will be 2050 Nm as a pump and dependent on leakage it may be necessary to reduce its stroke somewhat to enable it to speed up to 2102 rpm and allow the turbine to reach 20 rpm. However, since the bent axis unit 25 will be absorbing 451 kW, then with a combined loss of 20 % the swash plate unit 18 is unlikely to recover more than 360 kW i.e. a loss of 90 kW. Taken together with an overall gear loss of a similar amount, the net output from the gear will be some 3200 kW.

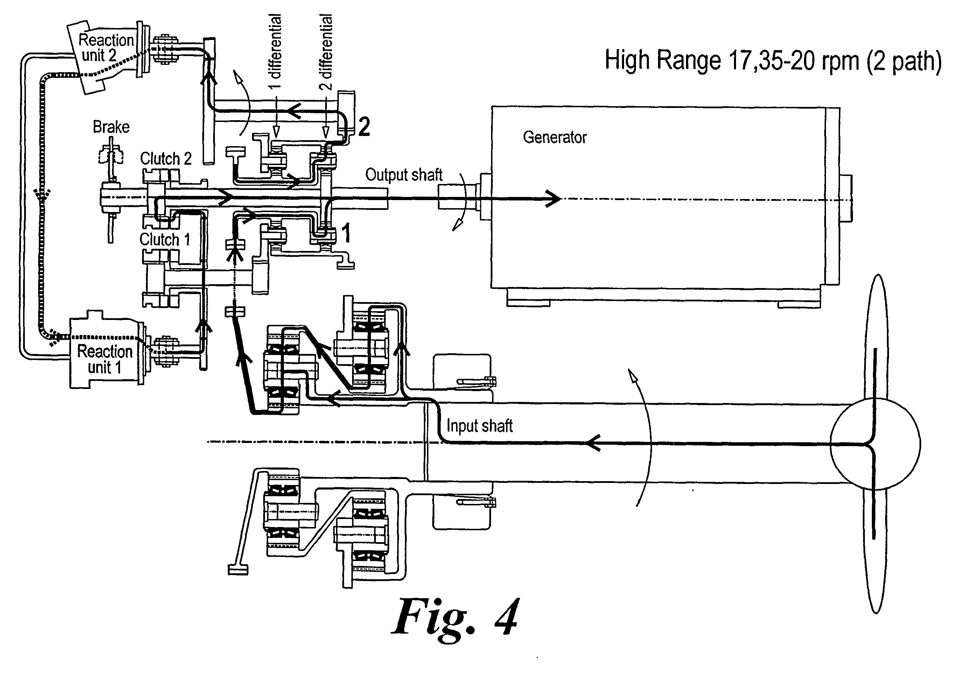

Figure 4 shows the power flow paths in the range from 17.35 to 20 rpm. As stated above, the power flows exclusively through planet carrier 14 and then divides with the major portion going mechanically to the output sunwheel 15. As the turbine increases from 17.35 annulus 24 rotates in the same sense as carrier 14 and sunwheel 15 to drive the bent axis unit as a pump, whose flow in turn drives the swash plate unit 18 as a motor driving the output shaft 16.

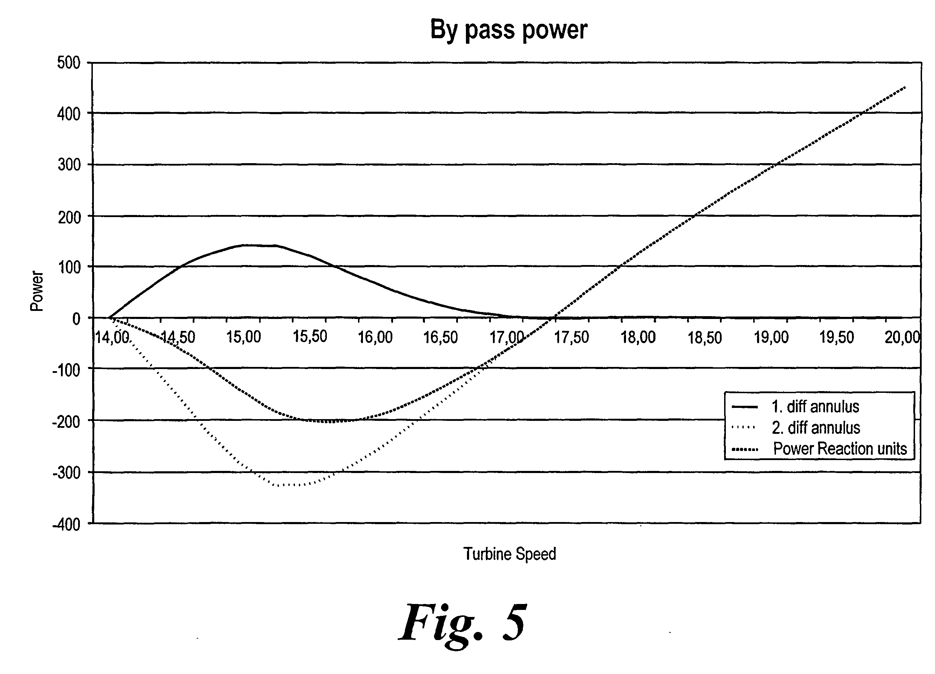

Figure 5 shows that between turbine speeds 14 to 17.35 rpm the algebraic sum of the respective powers in annuli 23 and 24 equates to the hydraulic bypass power, whereas from 17.35 to 20 rpm hydraulic power is equal to the power flowing exclusively from annulus 24.

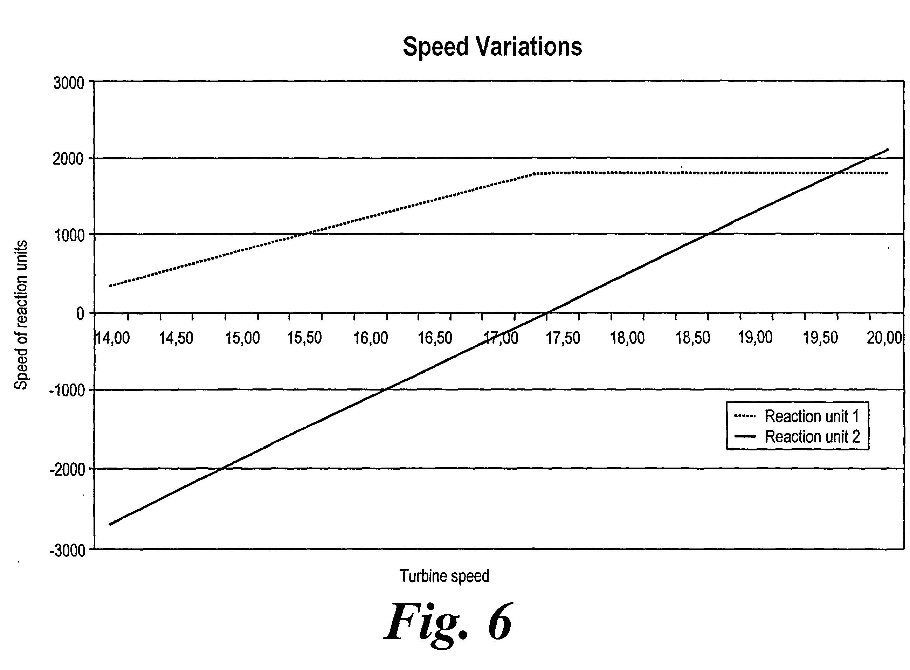

Figure 6 shows the speeds for reaction unit 1 and 2, plotted against turbine speed.

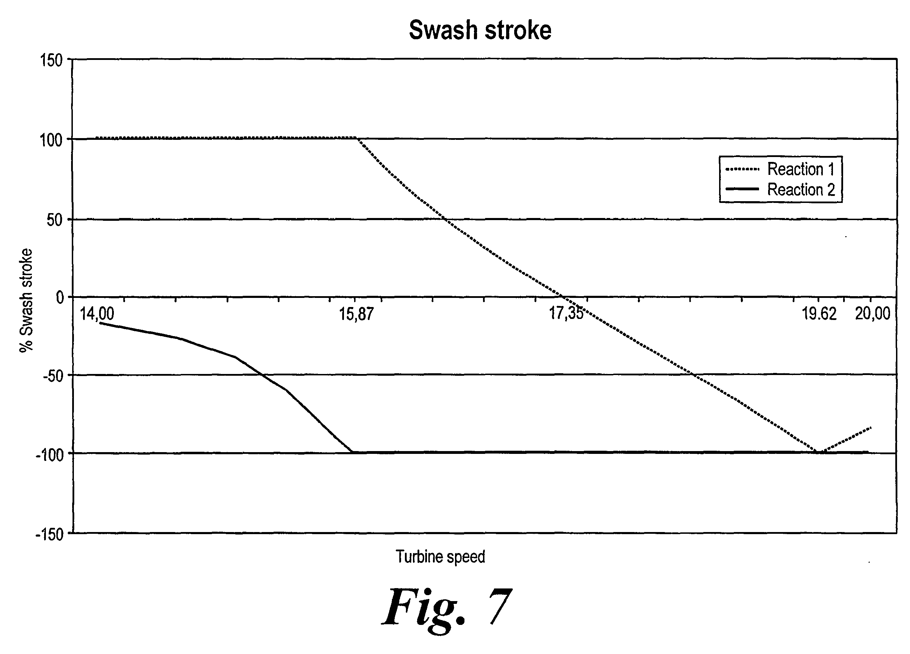

Figure 7 shows the % displacement variations of reaction units 1 and 2 plotted against turbine speed.

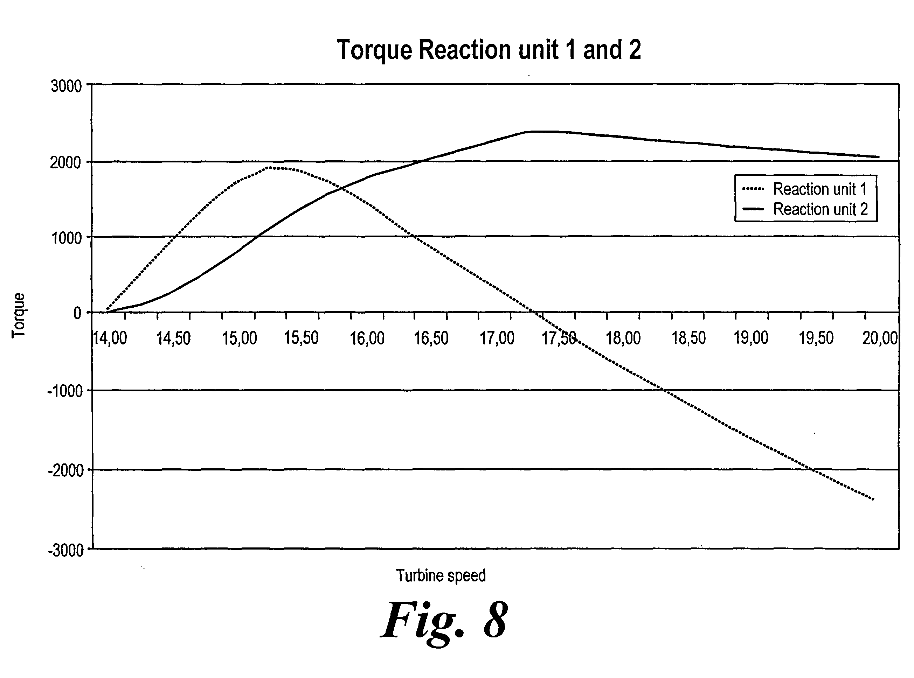

Figure 8 shows the torques for reaction units 18 and 25. NB. The figures 5 to 8 inclusive assume 100% efficiency in gears and hydraulic units. In particular, when the units are pumping they will absorb more torque for a given pressure than the net torque they can produce as motors. Similarly, the flows and strokes will need adjustment to allow for the leakage losses at various speeds, pressures and powers. This does not particularly complicate the control because in the lower range the respective reaction speeds are precisely related to one another in a linear manner which stabilises the transient ratio at any point, after allowing for rotational losses or gains due to leakage. The friction losses in the bearings and gears, pressure and torque loss in the hydraulics, then influence the final output torque in sun 15. Similarly, in the upper range the bent axis unit 25 as a pump will absorb more torque due to mechanical losses and increase in speed due to leakage, while the amount of power recovered by the swash plate unit 18 and returned to the output will be reduced by its pressure and mechanical losses.

As shown in Figure 8 the respective hydraulic unit torques and their associated pressure and strokes are precisely determined by the turbine power to speed relationship specified in Figure 2. This relationship is arbitrary and may be varied to suit different turbine performance characteristics and energy capture at different sites. The variable ratio between the turbine and output/generator speeds is in turn dictated by the respective stroke settings of the units as shown in Figure 7. Thus ratio variation is simply controlled by the hydraulic pressure because if turbine torque at any ratio setting tends to increase, then the associated reaction unit pressure will also tend to increase and trigger a stroke change to reduce the step up ratio and allow the turbine speed to increase. In so doing, the additional transient power in excess of the required generator power is absorbed by increasing the turbine speed and its kinetic energy. The ratio change will continue until the power and speed stabilise in accordance with Figure 2.

Conversely, if turbine torque tends to decrease, the step up ratio is increased to force the turbine speed to reduce so that the transient shortfall in required generator power is recovered by reducing the turbine speed and its kinetic energy. Again the increase of ratio will continue until stability is reached. In practice, the turbine rotor hub speed and the transient gear ratio will be fluctuating continuously because of the stochastic nature of the wind.

Once the design rated turbine power and speed are reached, the ratio control mechanism continues to be necessary because when the wind speed is greater than the design rating, it is necessary to vary blade pitch to try and keep the turbine at rated power and speed: However, if the rate at which the pitch control mechanism is able to respond cannot transiently maintain the turbine at its rated speed, then the gear ratio needs to be varied during the transition to keep the generator speed and power constant until the turbine pitch and speed stabilise at the design point. In effect, the pitch control will compensate for macro changes in wind speed while ratio control will deal with micro changes. Paradoxically, without ratio control it is the micro changes which can cause the most damaging torque fluctuations. If either the turbine or wind speed approach their respective maxima, then the normal shut down procedures will be followed.

In normal operation the sole dynamic control element is therefore the hydraulic reaction pressure in the very low-inertia hydraulic units. The respective strokes of these units may be changed quickly enough to vary the gear ratio and precisely control the turbine power and speed relationship as specified in Figure 2, while driving either a synchronous generator at a constant speed and varying phase angle, or an induction generator at variable slip frequency. The very high inertia of the turbine ensures that it cannot change speed quickly and therefore, its input torque to the gearbox can be very precisely controlled by varying the ratio. Similarly, the gearbox output torque to the generator is also governed by the reaction pressure and the ratio between generator and turbine speeds at the particular design point.

In the abnormal event of a power connection failure, the generated electrical power and the related hydraulic pressure will suddenly drop to zero. If this happens, the normal control mechanism is overridden and the gear ratio must be reduced instantly at a rate compatible with allowing the turbine to increase in speed while keeping the generator speed constant at zero load.

This means that, transiently, the whole of the wind energy driving the turbine must be absorbed by reducing its step up ratio and allowing its speed and kinetic energy to increase until the pitch control can be activated to bring the turbine back to its original and/or rated speed. Whether or not the interruption is short, the high inertia of the turbine ensures that the combination of pitch and ratio control will keep generator speed constant and enable it to be re-synchronised when connection is restored. Any small mis-match in phase angle or slip frequency will be absorbed by the cross line relief valve 31 in the hydraulic system.

In this application the particular advantage of using a hydrostatic transmission to bypass power, is its negligible referred inertia compared with the generator. It is relevant to point out that the collective referred inertia of the gear elements is also negligible for practical purposes. There is the added benefit of using a cross-line controllable relief valve to respond to any very sudden speed/torque fluctuations which might conceivably outpace the reaction times of the swash or stroke controls of the units. However, it should be appreciated that this invention is not limited to this form of bypass control but that other passive or positive means can be used for this purpose viz. other hydraulic, elasto-hydrodynamic, belt and electric variable drives e.g. switched reluctance motors and generators.

## Claims

1. A variable ratio gear box including two or more differential epicyclic trains (X,Y) coupled together to provide three or more mechanical paths for transmitting power and torque to an output shaft (16), a hydraulic bypass unit (18, 25) for steplessly variably adjusting the power and torque transmitted through the mechanical paths and a system of clutches (A, B, C) for determining which paths are utilised and the sense in which they, and hence the bypass unit, are driven, the gear box being **characterised in that** the mechanical paths utilised are determined by which of predetermined speed ranges the input speed falls.

2. A gear box as claimed in claim 1 wherein a lower speed range utilises three or more mechanical paths and a higher speed range which utilises fewer mechanical paths.

3. A gear box as claimed in claim 1 or 2 wherein a second mechanical path includes a sunwheel (15) on the second differential train mounted on the output shaft.

4. A gear box as claimed in any one of claims 1 to 3 wherein the second mechanical path includes a pinion (27) driven by the hydraulic bypass unit and drivingly connected via the annulus (24) of the second differential train mounted to the second differential sunwheel on the output shaft.

5. A gear box as claimed in any one of claims 1 to 4 wherein the third mechanical path includes the sunwheel (13) of one differential train, its annulus (23), the annulus (24) of the second differential train and the sunwheel (15) of the second differential train mounted on the output shaft (16).

6. A gear box as claimed in any one of claims 1 to 5 wherein the hydraulic bypass unit includes a closed hydraulic loop incorporating a variable stroke positive displacement hydraulic swash plate unit (18) and a variable stroke positive displacement bent axis unit (25), the two units being operable respectively as a motor and a pump or as a pump and a motor.

7. A gear box as claimed in claim 6 wherein the swash plate unit drives or is driven by the first differential train.

8. A gear box as claimed in claim 6 or claim 7 wherein the bent axis unit drives or is driven by the second differential train.

9. A gear box as claimed in any one of claims 6 to 8 wherein the closed hydraulic loop includes high and low pressure lines interconnecting the swash plate and bent axis units and wherein high and low pressure lines are interconnected by a cross line relief valve (31).

10. A transmission system including:
(a) a low speed high torque fixed ratio step up stage (1,2,3,4,5,6,7,8,9.10); and
(b) a low torque high speed variable ratio stage (X, Y, Z), having an output shaft, for receiving a steplessly variable input speed from the fixed ratio stage and providing a constant output speed on its output shaft wherein the variable ratio stage includes or comprises a gearbox as claimed in any of claims 1 to 9.

11. A transmission system as claimed in claim 10 wherein the fixed ratio stage includes two epicyclic stages wherein the epicyclic gears are arranged such that the planet carrier of the second stage acts in parallel to the first stage annuly and transmits part of the input power.

12. A transmission system including an input shaft (1), an output shaft (16), a gear box stage (X, Y) having a plurality of mechanical paths for transmitting power and torque to the output shaft, a hydraulic bypass unit (18, 25) including linked torque reaction units connected to respective reaction members for being driven or driving respective mechanical paths in accordance with input shaft speed regime and a control for interconnecting the reaction units and the respective mechanical paths, **characterised in that** a first speed regime the reaction units transmit power from one reaction member to the other, whereas in a second higher speed regime the reaction units transmit power to the output shaft.

13. A transmission system as claimed in claim 12 wherein in the second regime the power is absorbed by a prime mover (41) connected to the system to maintain the output power at the output shaft substantially constant.

## Patentansprüche

1. Getriebe mit veränderlicher Übersetzung, das zwei oder mehr Differentialplanetengetriebe (X, Y) aufweist, die zusammengekoppelt sind, so daß für eine Antriebswelle (16) drei oder mehr mechanische Kraft- und Drehmomentübertragungswege gebildet werden, ferner mit einer hydraulischen Bypaßeinheit (18, 25) zur stufenlos veränderlichen Einstellung der Kraft des Drehmoments, das über die mechanischen Wege übertragen wird, und mit einem System von Kupplungen (A, B, C) zur Bestimmung, welche Wege benutzt werden und der Richtung, in der sie und damit die Bypaßeinheit angetrieben werden, wobei sich das Getriebe **dadurch kennzeichnet, daß** die benutzten mechanischen Wege danach bestimmt werden, in welchen der vorbestimmten Drehzahlbereiche die Eingangsdrehzahl fällt.

2. Getriebe nach Anspruch 1, **gekennzeichnet durch** einen niedrigen Drehzahlbereich, der drei oder mehr mechanische Wege benutzt und einen höheren Drehzahlbereich, der weniger mechanische Wege benutzt.

3. Getriebe nach Anspruch 1 oder 2, **gekennzeichnet durch** einen zweiten mechanischen Weg, der ein Sonnenrad (15) auf dem zweiten Differentialgetriebe benutzt, das auf der Antriebs- bzw. Austragswelle gelagert ist.

4. Getriebe nach einem der Ansprüche 1 bis 3, **dadurch gekennzeichnet, daß** der zweite mechanische Weg ein Ritzelrad (27) aufweist, das von der hydraulischen Bypaßeinheit angetrieben wird und über den Ringspalt (24) mit dem zweiten Differentialgetriebe in Antriebsverbindung steht, das mit dem zweiten Differentialsonnenrad auf der Antriebswelle gelagert ist.

5. Getriebe nach einem der Ansprüche 1 bis 4, **dadurch gekennzeichnet, daß** der dritte mechanische Weg das Sonnenrad (13) eines Differentialgetriebes aufweist, ferner seinen Ringspalt (23), den Ringspalt (24) des zweiten Differentialgetriebes und das Sonnenrad (15) des zweiten Differentialgetriebes, das auf der Antriebswelle (16) befestigt ist.

6. Getriebe nach einem der Ansprüche 1 bis 5, **dadurch gekennzeichnet, daß** die hydraulische Bypaßeinheit eine geschlossene Hydraulikschleife aufweist, die eine hydraulische Taumelscheibeneinheit (18) mit Zwangsverdrängung und variablem Hub enthält sowie eine Schrägachseneinheit (25) mit variablem Hub und Zwangsverdrängung, wobei die beiden Einheiten als Motor und Pumpe bzw. als Pumpe und Motor arbeiten.

7. Getriebe nach Anspruch 6, **dadurch gekennzeichnet, daß** die Taumelscheibeneinheit das erste Differentialgetriebe antreibt oder von ihm angetrieben wird.

8. Getriebe nach Anspruch 6 oder 7, **dadurch gekennzeichnet, daß** die Schrägachsenreaktionseinheit das zweite Differentialgetriebe antreibt oder von dem zweiten Differentialgetriebe angetrieben wird.

9. Getriebe nach einem der Ansprüche 6 bis 8, **dadurch gekennzeichnet, daß** die geschlossene Hydraulikschleife Hoch- und Niederdruckleitungen aufweist, die die Taumelscheibeneinheit und die Schrägachsenreaktionseinheit miteinander verbinden, und daß die Hoch- und Niederdruckleitungen durch ein Querleitungsentspannungsventil 31 verbunden sind.

10. Übertragungssystem, **gekennzeichnet durch**
a) ein Getriebe (1, 2, 3, 4, 5, 6, 7, 8, 9, 10) mit einem fixen Aufstufungsverhältnis bei niedriger Drehzahl und hohem Drehmoment; und
b) einer variablen Stufung (X, Y, Z) bei niedrigem Drehmoment und hoher Drehzahl, das eine Antriebswelle aufweist, die von der fixen Verhältnisstufe eine stufenlos variable Eingangsdrehzahl aufnimmt und an ihrer Ausgangswelle eine konstante Ausgangsdrehzahl erzeugt, wobei die variable Stufe ein Getriebe umfaßt oder bildet, das in einem der Ansprüche 1 bis 9 beansprucht wird.

11. Übertragungssystem nach Anspruch 10, wobei die fixe Übersetzungsstufe zwei epizyklische Stufen aufweist, in denen die epizyklischen Zahnräder so angeordnet sind, daß der Planetenträger der zweiten Stufe parallel zum Ringspalt der ersten Stufe arbeitet und einen Teil der zugeführten Energie überträgt.

12. Übertragungssystem, umfassend eine Eingangswelle (1), eine Ausgangswelle (16), eine Getriebestufe (X, Y) mit mehreren mechanischen Wegen zur Übertragung von Kraft und Drehmoment auf die Ausgangswelle, eine hydraulische Bypaßeinheit (18, 25) mit angeschlossenen Drehmomentreaktionseinheiten, die mit den entsprechenden Reaktionsgliedern verbunden sind, um entsprechende mechanische Wege anzutreiben oder durch sie angetrieben zu werden, und zwar gemäß dem Drehzahlprogramm der Eintrittswelle und einer Steuerung für die Verbindung der Reaktionseinheiten und der entsprechenden mechanischen Wege, **dadurch gekennzeichnet, daß** ein erstes Drehzahlprogramm der Reaktionseinheiten von einem Reaktionsglied auf das andere Kraft überträgt, während in einem zweiten Programm mit höherer Drehzahl die Reaktionseinheiten Kraft auf die Antriebswelle übertragen.

13. Übertragungssystem nach Anspruch 12, **dadurch gekennzeichnet, daß** in dem zweiten Programm die Kraft von einer Antriebsmaschine (41) aufgenommen wird, die mit dem System verbunden ist, um die Ausgangskraft an der Antriebswelle im wesentlichen konstant zu halten.

## Revendications

1. - Boîte de vitesses à rapport variable comprenant deux trains (X, Y) épicycloïdaux différentiels ou davantage accouplés mutuellement afin de former trois parcours mécaniques ou davantage pour la transmission de puissance et de couple à un arbre de sortie (16), une unité (18, 25) de dérivation hydraulique pour ajuster en continu de manière variable la puissance et le couple transmis par les parcours mécaniques, et un système d'embrayages (A, B, C) pour déterminer quels parcours sont utilisés et le sens dans lequel ceux-ci, et de ce fait l'unité de dérivation, sont entraînés, la boîte de vitesses étant **caractérisée par le fait que** les parcours mécaniques utilisés sont déterminés par les plages de vitesse prédéterminées dans lesquelles la vitesse d'entrée se situe.

2. - Boîte de vitesses selon la revendication 1, dans laquelle une plage de vitesse inférieure utilise trois parcours mécaniques ou davantage et une plage de vitesse supérieure utilise moins de parcours mécaniques.

3. - Boîte de vitesses selon la revendications 1 ou la revendication 2, dans laquelle un second parcours mécanique comprend une roue solaire (15) sur le second train différentiel monté sur l'arbre de sortie.

4. - Boîte de vitesses selon l'une quelconque des revendications 1 à 3, dans laquelle le second parcours mécanique comprend un pignon (27) entraîné par l'unité de dérivation hydraulique et connecté en entraînement par l'intermédiaire de la couronne (24) du second train différentiel monté sur la seconde roue solaire différentielle sur l'arbre de sortie.

5. - Boîte de vitesses selon l'une quelconque des revendications 1 à 4, dans laquelle le troisième parcours mécanique comprend la roue solaire (13) d'un train différentiel, sa couronne (23), la couronne (24) du second train différentiel et la roue solaire (15) du second train différentiel monté sur l'arbre de sortie (16).

6. - Boîte de vitesses selon l'une quelconque des revendications 1 à 5, dans laquelle l'unité de dérivation hydraulique comprend une boucle hydraulique fermée incorporant une unité (18) à plateau oscillant hydraulique à déplacement positif à course variable et une unité (25) à axe courbe à déplacement positif à course variable, les deux unités étant actionnables respectivement comme moteur et comme pompe ou comme pompe et comme moteur.

7. - Boîte de vitesses selon la revendication 6, dans laquelle l'unité à plateau oscillant entraîne ou est entraînée par le premier train différentiel.

8. - Boîte de vitesses selon la revendication 6 ou la revendication 7, dans laquelle l'unité à axe courbe entraîne ou est entraînée par le second train différentiel.

9. - Boîte de vitesses selon l'une quelconque des revendications 6 à 8, dans laquelle la boucle hydraulique fermée comprend des lignes haute et basse pressions interconnectant les unités à plateau oscillant et à axe courbe et dans laquelle les lignes haute et basse pressions sont interconnectées par une soupape de surpression transversale (31).

10. - Système de transmission comprenant :
(a) un stade multiplicateur de rapport fixe (1, 2, 3, 4, 5, 6, 7, 8, 9, 10) à couple élevé et à vitesse faible ; et
(b) un stade (X, Y, Z) de rapport variable à vitesse élevée et à couple faible, ayant un arbre de sortie, pour recevoir une vitesse d'entrée variable en continu provenant du stade de rapport fixe et fournissant une vitesse de sortie constante sur son arbre de sortie, le stade de rapport variable incluant ou comprenant une boîte de vitesses telle que définie à l'une quelconque des revendications 1 à 9.

11. - Système de transmission selon la revendication 10, dans lequel le stade de rapport fixe comprend deux stades épicycloïdaux dans lesquels les engrenages épicycloïdaux sont disposés de telle sorte que le porte-pignons satellites du second stade agit en parallèle avec les couronnes du premier stade et transmet une partie de la puissance d'entrée.

12. - Système de transmission comprenant un arbre d'entrée (1), un arbre de sortie (16), un stade (X, Y) de boîte de vitesses ayant une pluralité de parcours mécaniques pour transmettre une puissance et un couple à l'arbre de sortie, une unité (18, 25) de dérivation hydraulique comprenant des unités de réaction de couple liées connectées à des éléments de réaction respectifs pour être des parcours mécaniques respectifs entraînés ou entraînants conformément au régime de vitesse d'arbre d'entrée et une commande pour interconnecter les unités de réaction et les parcours mécaniques respectifs, **caractérisé par le fait que**, dans un premier régime de vitesse, les unités de réaction transmettent une puissance d'un élément de réaction à l'autre, alors que, dans un second régime de vitesse supérieure, les unités de réaction transmettent une puissance à l'arbre de sortie.

13. - Système de transmission selon la revendication 12, dans lequel, dans le second régime, la puissance est absorbée par un moteur d'entraînement (41) connecté au système pour maintenir la puissance de sortie au niveau de l'arbre de sortie sensiblement constante.
